# EUROPEAN PATENT SPECIFICATION

(11) **EP 3 276 194 B1**
(45) Date of publication and mention of the grant of the patent: **08.12.2021**
(21) Application number: 16768458.8
(22) Date of filing: 10.03.2016
(51) Int. Cl.: F16C 33/66, F16C 19/16, F16C 41/00, F16N 7/38, F16C 33/58

(54) **BEARING DEVICE**
LAGERVORRICHTUNG
DISPOSITIF À PALIER

(30) Priority: 24.03.2015 JP 2015060712
(43) Date of publication of application: 31.01.2018
(73) Proprietor: NTN Corporation, Osaka-shi, Osaka 550-0003 (JP)
(72) Inventor: NASU, Keisuke, Kuwana-shi Mie 511-8678 (JP)
(74) Representative: Bockhorni & Brüntjen Partnerschaft Patentanwälte mbB
(86) International application number: PCT/JP2016/057561
(87) International publication number: WO 2016/152555

(56) References cited:
- WO-A1-2006/075741
- WO-A1-2014/181823
- JP-A- 2002 089 573
- JP-A- 2006 214 470
- JP-A- 2007 092 886
- JP-A- 2007 132 317
- JP-A- 2007 303 558
- JP-A- 2007 309 472
- JP-A- 2009 047 265
- JP-A- 2009 144 745
- JP-A- 2009 144 745
- JP-A- 2009 180 367
- US-A1- 2007 071 382
- US-A1- 2009 046 965
- US-A1- 2014 341 490
- NTN Corporation: "NTN supports the "Mono-Zukuri" manufacturing through the advanced technology", European Patent Register JIMTOF2012: The 26th Japan International Machine Tool Fair (Tokyo, Japan), 26 September 2017 (2017-09-26), XP002786828, Retrieved from the Internet: URL:https://register.epo.org/application?d ocumentId=E0YW7HF68366DSU&number=EP1676845 8&lng=en&npl=true

## Description

### TECHNICAL FIELD

The present invention relates to a bearing apparatus, more particularly, a bearing apparatus including a lubricating oil supply unit disposed adjacent to a bearing in order to supply lubricating oil to inside of the bearing.

### BACKGROUND ART

A rolling bearing apparatus has been conventionally known in which an oil supply unit is incorporated in a rolling bearing (see Japanese Patent Laying-Open No. 2014-37879 (Patent Document 1)). In the bearing apparatus disclosed in Patent Document 1, from a lubricating oil tank disposed in a spacer adjacent to the bearing, the bearing can be supplied with the lubricating oil stably for a long time by operating a pump intermittently. US 2007/0071382 shows a bearing apparatus including a lubricating oil supply unit on a front side of an angular ball bearing according to the preamble of claim 1.

### CITATION LIST

### PATENT DOCUMENT

PTD 1: Japanese Patent Laying-Open No. 2014-37879

### SUMMARY OF INVENTION

### TECHNICAL PROBLEM

In the apparatus disclosed in Patent Document 1, it is considered that the lubricating oil can be supplied for a long time; however, Patent Document 1 does not particularly state: a position via which the lubricating oil is supplied to the inside of the bearing apparatus; a structure for efficiently introducing the lubricating oil supplied to the inside of the bearing apparatus, to a contact portion between a rolling element and each of an inner ring and an outer ring so as to contribute to bearing lubrication; and the like.

The present invention has been made to solve the above problem, and has an object to provide a bearing apparatus that can be stably operated for a long time with supplied lubricating oil securely contributing to the bearing lubrication.

### SOLUTION TO PROBLEM

A bearing apparatus according to one embodiment of the present invention includes: a bearing; and a lubricating oil supply unit connected to the bearing. The bearing includes: an outer ring having an outer ring raceway surface at an inner circumferential surface of the outer ring; an inner ring having an inner ring raceway surface at an outer circumferential surface of the inner ring, the inner ring being disposed inwardly of the outer ring such that the inner ring raceway surface faces the outer ring raceway surface; a plurality of rolling elements in contact with the outer ring raceway surface and the inner ring raceway surface, the plurality of rolling elements being arranged side by side on an annular raceway; and a cage configured to hold the rolling elements. The lubricating oil supply unit includes: a retainer configured to retain lubricating oil to be supplied to inside of the bearing; a supplier configured to supply the lubricating oil from the retainer to the inside of the bearing; and a power generator configured to generate power. The supplier is operated using the power generated by the power generator. The supplier includes a nozzle for supplying the lubricating oil to the inside of the bearing. A tip of the nozzle is positioned at a center side of the cage relative to an end surface of the cage in an axial direction of the bearing. A ratio of a distance from the end surface of the cage to the tip of the nozzle with respect to a width of the cage is more than 0% and not more than 20%. The tip of the nozzle includes an end inclined or curved toward the outer ring side of the bearing. An inner diameter surface of the cage has a cross sectional shape with a larger diameter as the inner diameter surface of the cage extends toward the center side from an end portion of the inner diameter surface of the cage in the axial direction of the bearing. The shape of the inner diameter surface is a curved shape depressed toward the outer circumferential side of the bearing. The lubricating oil supply unit is disposed at a front side of the bearing. The tip of the nozzle is disposed to face a stepped portion of the outer circumferential surface of the inner ring of the bearing. The stepped portion is disposed at a position overlapping with the cage when viewed in the radial direction of the bearing.

### ADVANTAGEOUS EFFECTS OF INVENTION

According to the description above, the lubricating oil can be securely supplied from the lubricating oil supply unit to the contact portion between the rolling element and each of the inner ring and the outer ring, thereby implementing a bearing apparatus that can be operated stably for a long time.

### BRIEF DESCRIPTION OF DRAWINGS

Fig. 1 is a side surface schematic view of a bearing apparatus according to a first example useful for understanding the invention.
Fig. 2 is a schematic cross sectional view along a line segment II-II of Fig. 1.
Fig. 3 is a schematic cross sectional view of a mechanical apparatus to which the bearing apparatus shown in Fig. 1 is applied.
Fig. 4 is a schematic cross sectional view of the mechanical apparatus shown in Fig. 3.
Fig. 5 is a schematic cross sectional view of a bearing apparatus according to a second example.
Fig. 6 is a schematic cross sectional view of a bearing apparatus according to a third example.
Fig. 7 is a schematic cross sectional view of a bearing apparatus according to a fourth example.
Fig. 8 is a schematic cross sectional view of a bearing apparatus according to a first embodiment.
Fig. 9 is a schematic cross sectional view of a bearing apparatus according to a second embodiment.

### DESCRIPTION OF EXAMPLES USEFULL FOR UNDERSTANDING THE INVENTION AND EMBODIMENTS

The following describes examples useful for understanding the invention and embodiments of the present invention with reference to figures. It should be noted that in the below-mentioned figures, the same or corresponding portions are given the same reference characters and are not described repeatedly.

### (First Example)

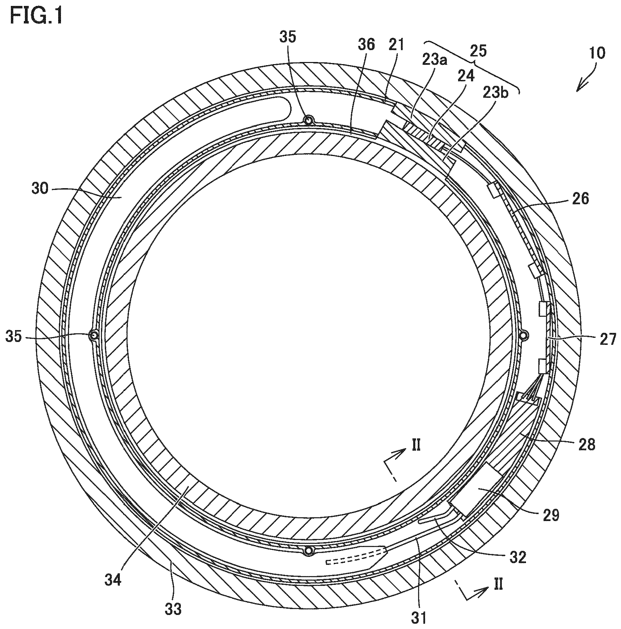

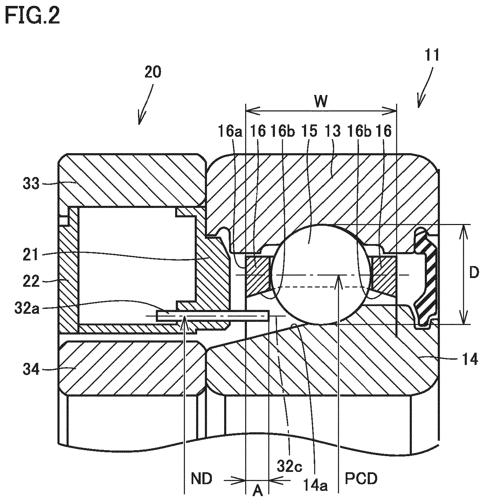

The following describes a bearing apparatus with reference to Fig. 1 and Fig. 2. A bearing apparatus 10 is a rolling bearing apparatus, and includes a bearing 11 (see Fig. 2), which is a rolling bearing, and a lubricating oil supply unit 20 (see Fig. 2). Lubricating oil supply unit 20 is incorporated between an outer ring spacer 33 and an inner ring spacer 34, each of which is laid against one end (end portion at the rear side) of bearing 11 in the axial direction of bearing 11. Bearing apparatus 10 including bearing 11 and lubricating oil supply unit 20 is used in such a state that bearing apparatus 10 is incorporated between rotation shaft and housing of a mechanical apparatus, for example. When bearing apparatus 10 is incorporated in the mechanical apparatus, another spacer may be laid against the other end of bearing 11, for example. In this case, bearing 11 can be positioned in the axial direction by outer ring spacer 33, inner ring spacer 34, and the other spacer.

Bearing 11 mainly includes: an inner ring 14, which is a bearing ring configured to be rotated, for example; an outer ring 13, which is fixed, for example; a plurality of rolling elements 15 located between inner ring 14 and outer ring 13; a cage 16 configured to hold the plurality of rolling elements 15 at a regular interval; and a seal member disposed at the outer circumferential side of cage 16. Examples of bearing 11 include an angular contact ball bearing, a deep groove ball bearing, a cylindrical roller bearing, and the like. A desired grease is sealed in bearing 11 in advance. The seal member is disposed at an end opposite to the side at which outer ring spacer 33 and the like are disposed.

Inner ring 14 of bearing 11 has an outer circumferential surface provided with an inner ring raceway surface that is in contact with rolling element 15. Moreover, the outer circumferential surface includes an inclination portion 14a continuous to the inner ring raceway surface. Inclination portion 14a is inclined relative to the axial direction to become closer to outer ring 13 as inclination portion 14a extends toward the inner ring raceway surface from the end portion (end portion at the rear side) of inner ring 14 in the axial direction.

An inner diameter surface 16b of cage 16 of bearing 11 has a cross sectional shape with a larger diameter as inner diameter surface 16b of cage 16 extends from an end portion of inner diameter surface 16b of cage 16 in the axial direction of bearing 11 to the center side. In the cross section thereof along the axial direction of bearing 11 as shown in Fig. 2, the shape of inner diameter surface 16b may be a straight shape, but may be a curved shape depressed toward the outer circumferential side of bearing 11.

A spacer is constructed of inner ring spacer 34 and outer ring spacer 33. Inner ring spacer 34 is laid against one end surface of inner ring 14 (end surface located at the rear side of bearing 11). Outer ring spacer 33 is laid against one end surface of outer ring 13 (end surface located at the rear side of bearing 11).

Lubricating oil supply unit 20 mainly includes a power generator 25, a power supply circuit 26, a control circuit 27, a drive circuit 28, a pump 29, and a lubricating oil tank 30, which are disposed in the circumferential direction in an annular housing. Power supply circuit 26 may include a charger. Lubricating oil tank 30 retains the same type of lubricating oil as the base oil of the grease sealed in bearing 11. Power generator 25, power supply circuit 26, control circuit 27, drive circuit 28, pump 29, and lubricating oil tank 30 are disposed side by side in the circumferential direction in a housing main body 21. Power generator 25 is connected to power supply circuit 26. Power supply circuit 26 is connected to control circuit 27. Control circuit 27 is connected to drive circuit 28. Drive circuit 28 is a circuit for operating pump 29 such as a micro pump. A suction tube 31 and a discharge tube 32 are connected to pump 29 connected to drive circuit 28. Suction tube 31 is connected to a pouch of lubricating oil tank 30. Discharge tube 32 is configured to supply the lubricating oil from pump 29 to the inside of bearing 11.

A nozzle 32a is connected to the tip of discharge tube 32 (end portion opposite to its root portion connected to pump 29) as shown in Fig. 2.

Nozzle 32a is disposed to extend from the inside of the annular housing of lubricating oil supply unit 20 to the outside of the housing. The tip of nozzle 32a extends to the inside of bearing 11.

As shown in Fig. 2, the annular housing of lubricating oil supply unit 20 includes: a housing main body 21 having an opening at a side opposite to bearing 11; and a lid body 22 that closes the opening of housing main body 21 and that is attachable/detachable to/from housing main body 21. Nozzle 32a is disposed to extend through a surface of housing main body 21 facing bearing 11.

The tip of nozzle 32a is disposed in inner ring 14 of bearing 11 at a position facing inclination portion 14a. Moreover, the position of the tip of nozzle 32a may be closer to the inner ring raceway surface relative to end surface 16a (see Fig. 2) of cage 16 in the axial direction. It should be noted that the inner diameter of a nozzle hole of nozzle 32a can be appropriately set in accordance with a relation between an amount of discharge and surface tension resulting from viscosity of the base oil.

In the axial direction of bearing 11, a ratio (A/W) × 100 (% as a unit) is more than 0% and not more than 20%, the ratio (A/W) being a ratio of a distance A from end surface 16a of cage 16 to the tip of nozzle 32a with respect to width W of cage 16. Moreover, the ratio (A/W) × 100 (% as a unit) may be not less than 2% or not less than 5%, for example. Moreover, the ratio may be not more than 18% or not more than 15%.

Moreover, the size and arrangement of bearing 11 and nozzle 32a are determined to satisfy a relational expression "PCD - D < ND < PCD - 0.3D" among a pitch diameter ND of the tip of nozzle 32a (value obtained by multiplying, by 2, a distance from the center of rotation of bearing 11 to central line 32c in the tip of nozzle 32a), a pitch diameter PCD of rolling element 15 (value obtained by multiplying, by 2, a distance from the center of rotation of bearing 11 to the center of rolling element 15), and a width D of rolling element 15 in the radial direction of bearing 11 (diameter of rolling element 15, which is a ball).

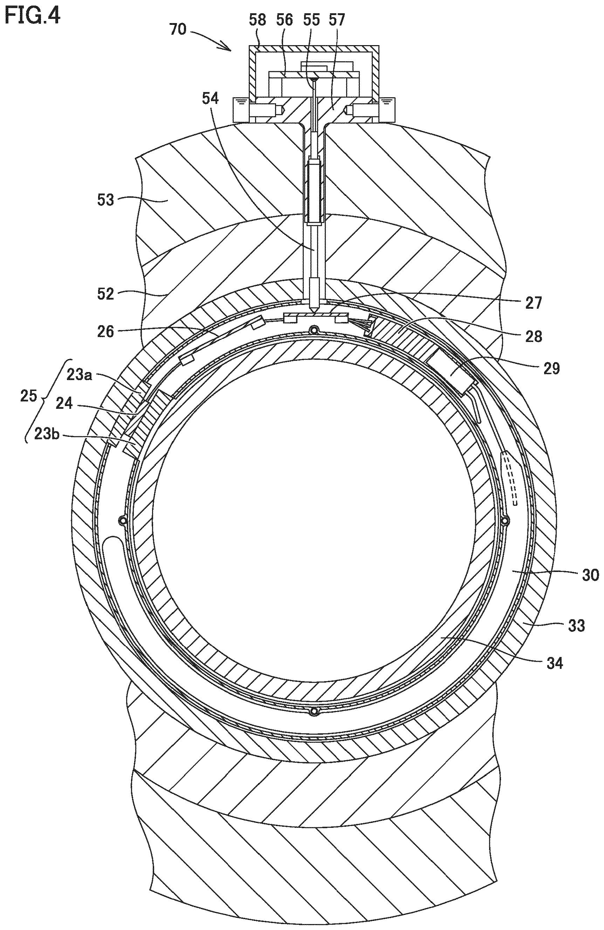

Control circuit 27 of lubricating oil supply unit 20 as shown in Fig. 1 can obtain data regarding a state of supply of the lubricating oil in lubricating oil supply unit 20, and can output the data to outside of control circuit 27 (such as an output board 56 (see Fig. 4) serving as a receiver), for example.

Examples of power generator 25 of lubricating oil supply unit 20 include a power generator configured to generate power through a Seebeck effect. Specifically, power generator 25 includes: a heat conductor 23a connected to outer ring spacer 33; a heat conductor 23b disposed at inner ring spacer 34; and a thermoelectric element 24 (element employing the Seebeck effect of a Peltier device) disposed to connect between heat conductor 23a and heat conductors 23b and closely fixed to heat conductors 23a, 23b.

Here, when a rolling bearing apparatus (for example, a rolling bearing apparatus using an angular contact ball bearing as bearing 11) is used as bearing apparatus 10 as shown in Fig. 2, the temperatures of inner ring 14 and outer ring 13 are increased due to heat of friction with rolling element 15 (see Fig. 2). Normally, outer ring 13 is incorporated in the housing of the apparatus, so that the heat is radiated by heat conduction. Therefore, there occurs a temperature difference between inner ring 14 and outer ring 13 (the temperature of inner ring 14 is higher than the temperature of outer ring 13). Respective heats with the temperatures are conducted to heat conductors 23a, 23b. Heat conductors 23a, 23b are disposed to respectively extend through the inner circumferential surface and outer circumferential surface of housing main body 21. Therefore, there occurs a temperature difference between the both end surfaces of thermoelectric element 24 disposed between heat conductor 23a (heat sink) connected to outer ring 13 with outer ring spacer 33 interposed therebetween and heat conductor 23b located at the inner ring spacer 34 side (inner ring 14 side). Accordingly, in thermoelectric element 24, power can be generated through the Seebeck effect. Since such a power generator 25 is used, it is not necessary to supply power to the lubricating oil supply unit from outside. Hence, no electric wire needs to be attached to a machine tool spindle 50 in order to supply power from outside.

Heat conductor 23a extending through the outer circumferential surface of housing main body 21 has a surface in contact with the inner circumferential surface of outer ring spacer 33. For this surface of heat conductor 23a, an adhesive agent in consideration of heat conductivity is preferably used. It should be noted that the curvature radius of the outer circumferential surface of heat conductor 23a at the outer ring 13 side is preferably substantially the same as the curvature radius of the inner circumferential surface of outer ring spacer 33. This leads to close contact between the inner circumferential surface of outer ring spacer 33 and the outer circumferential surface of heat conductor 23a, whereby heat can be efficiently conducted between heat conductor 23a and each of outer ring spacer 33 and outer ring 13. On the other hand, the inner circumferential surface (surface facing inner ring spacer 34) of heat conductor 23b at the inner ring side is not in contact with inner ring spacer 34. If possible, heat conductor 23a at the outer ring side and heat conductor 23b at the inner ring side desirably have the same volume. Moreover, heat conductor 23b at the inner ring side desirably has a large surface area.

It should be noted that in order to improve heat conductivity and close contact, a heat releasing grease or the like is preferably applied between the inner circumferential surface of outer ring spacer 33 and heat conductor 23a, between heat conductor 23a and thermoelectric element 24, and between thermoelectric element 24 and heat conductor 23b at the inner ring side. Generally, the heat releasing grease is mainly composed of silicone. Moreover, as the material of each of heat conductors 23a, 23b, it is preferable to use a metal having high heat conductivity. For example, silver (Ag), copper (Cu), gold (Au), or the like can be used; however, it is preferable to use copper in view of cost. It should be noted that as the material of each of heat conductors 23a, 23b, a copper alloy mainly composed of copper may be used or a sintered alloy mainly composed of copper may be used. It should be also noted that the heat conductor connected to thermoelectric element 24 may be disposed only at the high temperature side, and thermoelectric element 24 may be closely fixed to the spacer (outer ring spacer 33) at the low temperature side.

Charges generated by power generator 25 are stored in power supply circuit 26. Specifically, the charges are stored in a power storage unit, such as a storage battery or a capacitor, included in power supply circuit 26 (also referred to as "power storage circuit"). A preferable example of the capacitor used herein is an electric double layer capacitor.

Control circuit 27, which is a controller for controlling an operation of pump 29 using drive circuit 28, includes: a program storage having a control program held therein; and an arithmetical unit (microcomputer) connected to the program storage and configured to execute the control program. A time of starting to supply the lubricating oil to bearing 11, a timing (interval) of supply thereof, a time of driving pump 29 to supply the lubricating oil, an amount of supply of the lubricating oil, and the like can be set in advance by control circuit 27. Further, by thus maintaining an appropriate state of supply of the lubricating oil, the lubricating life of the bearing apparatus can be extended.

Drive circuit 28, which serves as a driver, may include any sensor (such as a bearing temperature sensor, a bearing rotation sensor, a lubricating oil remaining amount sensor, a lubricating oil temperature sensor, or the like), for example. A signal from each of these sensors may be sent to an arithmetical unit (microcomputer) of drive circuit 28 so as to automatically control pump 29 in accordance with the temperature and rotation state of bearing 11 to adjust the amount of supply of the lubricating oil.

Pump 29 is controlled by control circuit 27 using drive circuit 28. Pump 29 suctions the lubricating oil from lubricating oil tank 30 via suction tube 31, and supplies the suctioned lubricating oil to the inside of bearing 11 via discharge tube 32 and nozzle 32a.

Each of housing main body 21 and lid body 22 included in the annular housing of lubricating oil supply unit 20 may be composed of any material such as a resin material, more preferably, a thermoplastic resin. Examples of the material of the housing include polyphenylene sulfide (PPS) and the like. Moreover, housing main body 21 and lid body 22 may be composed of the same material or may be composed of different materials.

Lid body 22 of the housing may be fixed to housing main body 21 by a screw, which is an exemplary fixation member. By fixing lid body 22 to housing main body 21, the inside of the housing surrounded by housing main body 21 and lid body 22 can be sealed. It should be noted that lid body 22 can be detached by removing the screw from a tap hole 35 into which the screw serving as the fixation member is fixed. In this way, lubricating oil tank 30 contained in housing main body 21 can be supplemented with the lubricating oil without detaching the whole of lubricating oil supply unit 20 from bearing apparatus 10.

Housing main body 21 may be fixed to the inner circumferential surface of outer ring spacer 33. Housing main body 21 may be adhered and fixed to outer ring spacer 33 by, for example, an adhesive agent. Examples of the adhesive agent for adhering and fixing housing main body 21 may include an epoxy resin and the like. It should be noted that housing main body 21 (i.e., lubricating oil supply unit 20) may be fixed to the stationary ring of bearing 11. It should be noted that a clearance 36 may be formed between housing main body 21 and inner ring spacer 34.

Next, lubricating oil tank 30 contained in housing main body 21 may be constituted of a pouch composed of a resin having flexibility. Lubricating oil tank 30 may be disposed in the form of a circular arc along annular housing main body 21.

The resin pouch of lubricating oil tank 30 may be constructed by stacking resin sheets and thermally joining the outer circumferential portions thereof, for example. The outer circumferential portion of lubricating oil tank 30 may be such a thermally joined portion.

The pouch of lubricating oil tank 30 is provided with suction tube 31 connected to pump 29. Suction tube 31 is sandwiched and thermally joined between the resin sheets stacked to form the pouch when forming the pouch of lubricating oil tank 30 by the thermal joining. Thus, suction tube 31 can be in one piece with the pouch.

It should be noted that the pouch of lubricating oil tank 30 can be configured appropriately in a different manner. For example, the pouch may be formed by blow molding. In this case, suction tube 31 can be formed in one piece with the pouch by the blow molding. When the pouch of lubricating oil tank 30 is formed by the blow molding as described above, the pouch has an inflated shape (a shape like a sack). Hence, a portion like a sack is desirably formed to be flat after molding the pouch. By forming the portion like a sack to be flat, the lubricating oil can be fully discharged from lubricating oil tank 30 even when the amount of the lubricating oil becomes small. That is, substantially all the lubricating oil in lubricating oil tank 30 can be used.

The pouch of lubricating oil tank 30 can be composed of any material and is preferably composed of a resin material. Examples of the material of lubricating oil tank 30 include nylon, polyethylene, polyester, polypropylene, and the like. The material of lubricating oil tank 30 is not particularly limited as long as the material has durability against the lubricating oil contained in the pouch.

Suction tube 31 provided at the pouch of lubricating oil tank 30 may be detachably connected to pump 29. Since suction tube 31 is detachable from pump 29, suction tube 31 can be detached from pump 29 and the pouch can be supplemented with the lubricating oil from suction tube 31 when no lubricating oil remains in lubricating oil tank 30.

Moreover, since the pouch of lubricating oil tank 30 is detachable from pump 29, the pouch can be replaced with a prepared spare pouch filled with lubricating oil. For example, when the lubricating oil in lubricating oil tank 30 in use is used up, the used-up pouch of lubricating oil tank 30 is detached and is replaced with the spare pouch (pouch filled with the lubricating oil), thereby supplementing lubricating oil supply unit 20 with the lubricating oil in a short time.

Moreover, the spare pouch may be filled with the lubricating oil under a controlled condition by a lubricating oil manufacturer or the like. This leads to a reduced probability of occurrence of problems during the filling, such as entrance of a foreign matter to the pouch. It should be noted that during storage of the spare pouch, it is preferable to attach a cover to suction tube 31 of the spare pouch. In this way, a foreign matter can be prevented from being introduced into the pouch during the storage of the pouch.

It should be noted that in the above-described bearing apparatus, the inner ring is rotated. Moreover, the center of rotation corresponds to the horizontal axis, but may correspond to the vertical axis.

### <Operation of Bearing Apparatus>

In bearing apparatus 10 including bearing 11 and lubricating oil supply unit 20, the lubricating oil can be supplied from lubricating oil tank 30 to bearing 11 by controlling the operation of pump 29 by control circuit 27.

Further, inclination portion 14a is first reached by the lubricating oil supplied to the inside of bearing 11 via the tip of nozzle 32a disposed close to rolling element 15 relative to end surface 16a of cage 16. Then, due to centrifugal force caused by rotation of inner ring 14, the lubricating oil flows toward rolling element 15 on the surface of inclination portion 14a of inner ring 14. In this way, the lubricating oil supplied to the inside of bearing 11 is supplied to the contact portion between rolling element 15 and each of inner ring 14 and outer ring 13. As a result, lubricity of bearing 11 can be maintained for a long time.

Moreover, since nozzle 32a is disposed such that ratio (A/W) × 100 (% as a unit) of distance A from end surface 16a of cage 16 to the tip of nozzle 32a with respect to width W of cage 16 is more than 0% and not more than 20%, the lubricating oil can be supplied securely to the inside of bearing 11 at a position adjacent to rolling element 15.

Further, since the size and arrangement of bearing 11 and nozzle 32a are determined to satisfy the relational expression "PCD - D < ND < PCD - 0.3D" among pitch diameter ND of the tip of nozzle 32a, pitch diameter PCD of rolling element 15, and width D of rolling element 15 in the radial direction of bearing 11, the tip of nozzle 32a is disposed between the outer circumferential surface of inner ring 14 of bearing 11 and inner diameter surface 16b of cage 16. Accordingly, the lubricating oil can be securely supplied between cage 16 and inner ring 14 from nozzle 32a.

Moreover, since inner diameter surface 16b of cage 16 has a shape with a larger diameter as inner diameter surface 16b of cage 16 extends toward the center side, the lubricating oil having been moved by the centrifugal force caused by rotation of inner ring 14 and having reached inner diameter surface 16b in bearing 11 is facilitated to be guided to the rolling element 15 side along inner diameter surface 16b of cage 16. Also in view of this, the lubricating oil can be securely supplied to the contact portion between rolling element 15 and each of inner ring 14 and outer ring 13.

It should be noted that pump 29 can be driven at a timing at which the power generated by power generator 25 is stored in the power storage unit (for example, a capacitor) of power supply circuit 26 and the voltage in the power storage unit reaches a certain voltage. Further, in order to increase the lubricating life of bearing 11 having the grease sealed therein to secure a long time until maintenance is required, pump 29 is desirably driven whenever a predetermined time interval has passed.

For example, when a charging time until the voltage in the power storage unit reaches a voltage required to drive pump 29 (or the power storage unit is fully charged) comes to end at a time earlier than the timing of supplying the required lubricating oil, a predetermined power storage time (delay time) is added after a point of time t1 at which the voltage in the power storage unit has reached the predetermined voltage (i.e., the power storage unit has reached a fully charged state) (i.e., a delay time from the point of time t1 to the point of time t2 is added), with the result that pump 29 is driven using the power stored in the power storage unit at the point of time t2. In this way, the interval of supply of the lubricating oil can be managed to be longer than the time at which the voltage in the power storage unit reaches the predetermined voltage (for example, the fully charged state).

### <Configuration of Mechanical Apparatus>

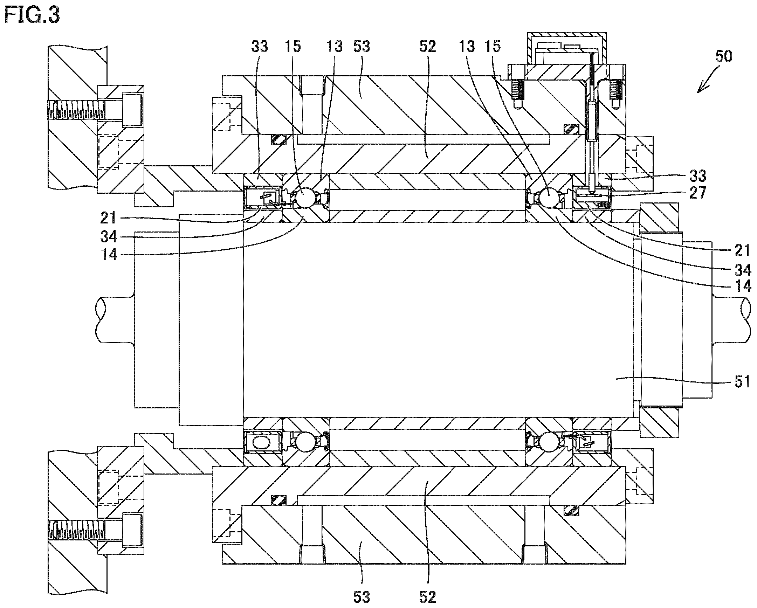

With reference to Fig. 3 and Fig. 4, the following describes a configuration of the machine tool spindle, which is an exemplary mechanical apparatus to which the bearing apparatus according to the present embodiment is applied.

As shown in Fig. 3 and Fig. 4, machine tool spindle 50 mainly includes: a rotation shaft 51; a spindle housing 52 disposed to surround rotation shaft 51; an outer circumferential housing 53 disposed at the outer circumference of spindle housing 52; and bearing apparatuses for holding rotation shaft 51 to be rotatable relative to spindle housing 52. Two bearing apparatuses are disposed at the outer circumference of rotation shaft 51. Inner ring 14 and inner ring spacer 34 of the bearing in each of the bearing apparatuses are fixedly engaged with the side surface of rotation shaft 51. Moreover, outer ring 13 and outer ring spacer 33 of the bearing are fixedly engaged with the inner circumferential surface of spindle housing 52. It should be noted that the bearing including inner ring 14, outer ring 13, and rolling elements 15 is an angular contact ball bearing. Each of rolling elements 15 is a ball disposed between inner ring 14 and outer ring 13. Lubricating oil supply unit 20 is disposed between inner ring spacer 34 and outer ring spacer 33 disposed adjacent to the bearing. Moreover, between the two bearings (at the side opposite to the side at which the respective lubricating oil supply units are disposed), another spacer is fixedly engaged with rotation shaft 51 and spindle housing 52 and is laid against inner ring 14 and outer ring 13.

At a region facing control circuit 27 of the lubricating oil supply unit, a through hole is formed to extend through housing main body 21 (see Fig. 2), outer ring spacer 33, spindle housing 52, and outer circumferential housing 53. At the outer circumferential side end of this through hole, a flat portion is provided at the surface of outer circumferential housing 53 and a mount 57 is disposed on the flat portion.

Output board 56 is disposed on mount 57. Output board 56 is electrically connected to control circuit 27 of lubricating oil supply unit 20 by a contact probe 54, for example. Contact probe 54 is disposed inside the above-described through hole. One end of contact probe 54 is in contact with an electrode pad (not shown) of control circuit 27, whereas the other end of contact probe 54 is connected to output board 56 via an electric conduction line 55. Contact probe 54 may be fixedly connected to output board 56. Moreover, output board 56 may be connected to control circuit 27 in the wired manner as described above, or may be connected thereto by other connection means (for example, optical communication means employing a light emitting element and a light receiving element).

A cover member 58 is fixed to mount 57 to cover output board 56 disposed on mount 57. On output board 56, a battery and a storage are disposed. The battery is a power supply for driving a circuit of output board 56. Examples of the battery include a coin type battery and a button type battery. It is desirable to use a lithium battery as the battery. A holder is disposed on a surface of output board 56 to fix such a battery. Meanwhile, for the storage, for example, there can be used: a retention portion (slot) to which a card-shaped external storage medium is fixedly connected; and the external storage medium detachably fixed to the retention portion. Examples of the external storage medium include any conventionally known storage medium such as a memory card.

Cover member 58 is provided with a U-shaped long hole portion (hole into which a fixation bolt can be disposed) to permit detachment thereof from mount 57 only by unfastening the fixation bolt serving as a connection member for mount 57. The above-described battery and external storage medium can be replaced in such a state that cover member 58 is detached from mount 57.

Output board 56 sealed by mount 57 and cover member 58 constitutes a major portion of a voltage monitoring unit. Each of mount 57 and cover member 58 can be provided with an appropriate water-resistant structure in order to prevent entrance of coolant or the like used during machining with the machine spindle. Examples of the water-resistant structure include a packing, an O ring, a caulking, a resin mold, and the like.

Moreover, machine tool spindle 50 includes the lubricating oil supply unit including: a unit main body that is connected to bearing 11 (see Fig. 2) including inner ring 14, outer ring 13, and rolling elements 15 as described above and that includes a controller having control circuit 27 (see Fig. 1); and an external output unit 70 serving as the voltage monitoring unit connected to the controller by the connection line (contact probe 54). The unit main body includes: the controller including control circuit 27; a power supply including power generator 25 (see Fig. 1) and power supply circuit 26 (see Fig. 1); the lubricating oil supplier including power supply circuit 26, drive circuit 28, and pump 29; and the lubricating oil retainer (lubricating oil tank 30). The controller is connected to the power supply and the lubricating oil supplier, controls the state of supply of the lubricating oil in the lubricating oil supplier, and obtains data regarding the state of supply of the lubricating oil. Examples of the data include: data of the timing of supply of the lubricating oil or the interval of supply of the lubricating oil; and data of the voltage (voltage of the stored power) in the power supply circuit (specifically, the power storage unit) when operating pump 29 or the like.

Any configuration can be employed for the configuration of the connection portion between control circuit 27 of the controller and output board 56 of external output unit 70; however, the arithmetical unit (microcomputer) disposed in control circuit 27 may be connected to the arithmetical unit of output board 56 by a connection line. The arithmetical unit of control circuit 27 is connected to the power supply or a ground portion via an interconnection or the like. Moreover, in output board 56, the arithmetical unit is connected to the battery and the storage. From the arithmetical unit to the storage, a signal (signal sent from control circuit 27) indicating data such as voltage can be sent.

According to the above configuration, the storage of output board 56 stores the data regarding the state of supply of the lubricating oil and sent from control circuit 27. This data can be sent from control circuit 27 to output board 56 at any timing; however, the data may be transferred from control circuit 27 to output board 56 when the storage (such as a storage element included in the arithmetical unit or a storage element provided in control circuit 27 independently of the arithmetical unit) of control circuit 27 becomes full of the data, for example. When the data includes time-change data of the voltage of the stored power of the power supply, the data can be stored in an external storage medium via the storage of output board 56 and can be introduced into an external computer or the like using the external storage medium. In this way, the state of the lubricating oil supply unit (such as the state of power generation or the operation state of pump 29) can be checked on the external computer.

### <Operation of Mechanical Apparatus>

In machine tool spindle 50, which is an exemplary mechanical apparatus shown in Fig. 3 and Fig. 4, rotation shaft 51 is connected to a predetermined drive shaft and is rotatable relative to spindle housing 52. Moreover, in the bearing apparatus that supports rotation shaft 51, the lubricating oil supply unit regularly supplies the lubricating oil to bearing 11 (see Fig. 2). Accordingly, reliability and durability of machine tool spindle 50 are improved.

### (Second Example)

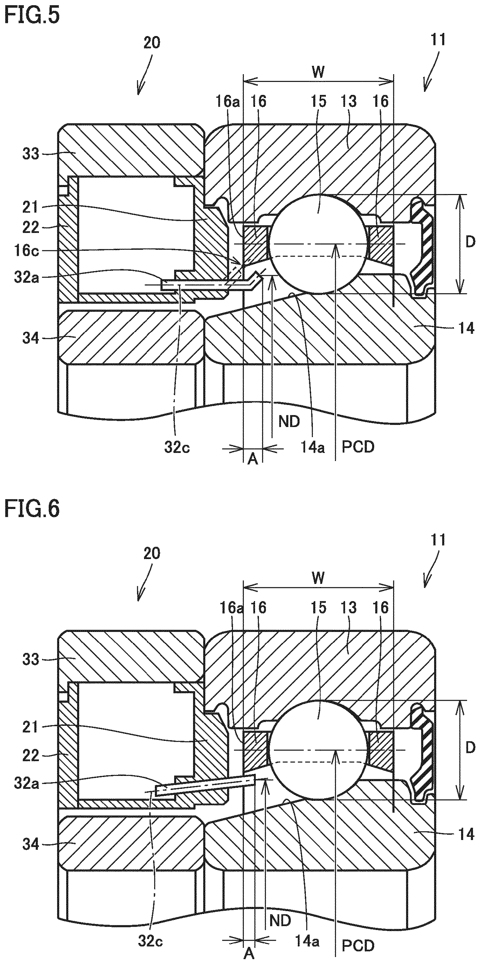

With reference to Fig. 5, a bearing apparatus according to a second example will be described. A bearing apparatus 10 includes basically the same configuration as that of bearing apparatus 10 shown in Fig. 1 and Fig. 2 but is different from bearing apparatus 10 shown in Fig. 1 and Fig. 2 in terms of the shape of nozzle 32a. Specifically, the tip of nozzle 32a includes an end inclined (curved) toward the cage 16 side (the outer ring 13 side of bearing 11). Further, the shape and position of nozzle 32a are determined such that an intersection between the center axis of the tip (curved end) of nozzle 32a and the surface of cage 16 is located at the rolling element 15 side relative to end surface 16a of cage 16 in the axial direction of bearing 11. More specifically, nozzle 32a is disposed such that the intersection between the center axis of the tip of nozzle 32a and the surface of cage 16 is located at the rolling element 15 side relative to a corner portion 16c at the inner circumferential side in end surface 16a of cage 16.

In this way, the same effect as that of bearing apparatus 10 shown in Fig. 1 and Fig. 2 can be obtained, and the lubricating oil discharged from nozzle 32a can be securely supplied toward cage 16 or rolling element 15 via a region near rolling element 15 relative to end surface 16a of cage 16.

### (Third Example)

With reference to Fig. 6, a bearing apparatus according to a third example will be described. A bearing apparatus 10 includes basically the same configuration as that of bearing apparatus 10 shown in Fig. 1 and Fig. 2 but is different from bearing apparatus 10 shown in Fig. 1 and Fig. 2 in terms of the shape of nozzle 32a. Specifically, the whole of the tip of nozzle 32a is inclined (curved) toward the cage 16 side (the outer ring 13 side of bearing 11). Further, the position of nozzle 32a is determined such that an intersection between the center axis of the tip of nozzle 32a and the surface of cage 16 is located at the rolling element 15 side relative to end surface 16a of cage 16 in the axial direction of bearing 11.

In this way, the same effect as that of bearing apparatus 10 shown in Fig. 1 and Fig. 2 can be obtained, and as with bearing apparatus 10 shown in Fig. 5, the lubricating oil discharged from nozzle 32a can be securely supplied toward cage 16 or rolling element 15 via a region near rolling element 15 relative to end surface 16a of cage 16.

### (Fourth Example)

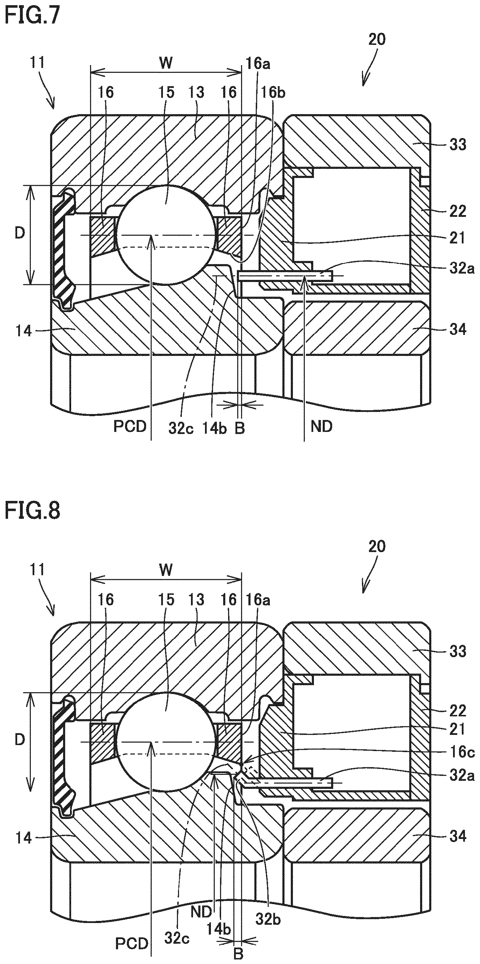

With reference to Fig. 7, a bearing apparatus according to a fourth example will be described. A bearing apparatus 10 includes basically the same configuration as that of bearing apparatus 10 shown in Fig. 1 and Fig. 2, but is different therefrom in an arrangement of lubricating oil supply unit 20 relative to bearing 11. Namely, in bearing apparatus 10 shown in Fig. 7, lubricating oil supply unit 20 is disposed at the front side of bearing 11.

The tip of nozzle 32a of lubricating oil supply unit 20 is disposed to face a stepped portion 14b of the outer circumferential surface of inner ring 14 of bearing 11. Stepped portion 14b is disposed at a position overlapping with cage 16 when viewed in the radial direction of bearing 11. Moreover, the tip of nozzle 32a extends to a position located between cage 16 and inner ring 14 and overlapping with cage 16 when viewed in the radial direction of bearing 11. Moreover, in the axial direction of bearing 11, a ratio (B/W) × 100 (% as a unit) is more than 0% and not more than 10%, the ratio (B/W) being a ratio of a distance B from end surface 16a of cage 16 to the tip of nozzle 32a with respect to width W of cage 16.

In this way, the same effect as that of bearing apparatus 10 shown in Fig. 1 and

Fig. 2 can be obtained, and the lubricating oil discharged from nozzle 32a can be securely supplied to rolling element 15 via stepped portion 14b of inner ring 14 and inner diameter surface 16b of cage 16.

### (First Embodiment)

With reference to Fig. 8, a bearing apparatus according to the present embodiment will be described. A bearing apparatus 10 according to the present embodiment includes basically the same configuration as that of bearing apparatus 10 shown in Fig. 7 but is different from bearing apparatus 10 shown in Fig. 7 in terms of the shape of nozzle 32a. Specifically, as with bearing apparatus 10 shown in Fig. 5, the tip of nozzle 32a includes an end 32b inclined (curved) toward the cage 16 side (the outer ring 13 side of bearing 11). Further, the shape and position of nozzle 32a are determined such that an intersection between center line 32c of the tip (curved end 32b) of nozzle 32a and the surface of cage 16 is located at the rolling element 15 side relative to end surface 16a of cage 16 in the axial direction of bearing 11.

In this way, the same effect as that of bearing apparatus 10 shown in Fig. 7 can be obtained, and the lubricating oil discharged from nozzle 32a can be securely supplied toward cage 16 or rolling element 15 via a region near rolling element 15 relative to end surface 16a of cage 16.

### (Second Embodiment)

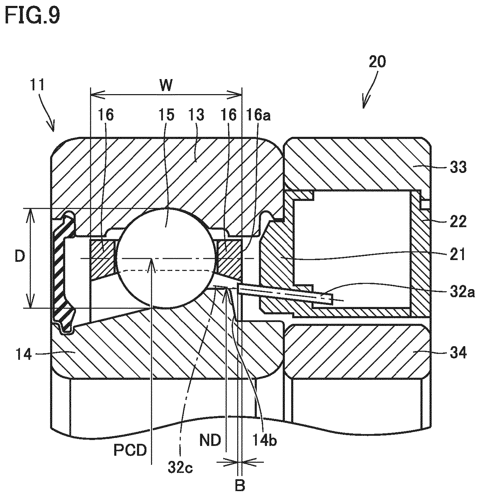

With reference to Fig. 9, a bearing apparatus according to the present embodiment will be described. A bearing apparatus 10 according to the present embodiment includes basically the same configuration as that of bearing apparatus 10 shown in Fig. 7 but is different from bearing apparatus 10 shown in Fig. 7 in terms of the shape of nozzle 32a. Specifically, as with bearing apparatus 10 shown in Fig. 6, the whole of the tip of nozzle 32a is inclined (curved) toward the cage 16 side (the outer ring 13 side of bearing 11). Further, the position of nozzle 32a is determined such that an intersection between the center axis of the tip of nozzle 32a and the surface of cage 16 is located at the rolling element 15 side relative to end surface 16a of cage 16 in the axial direction of bearing 11.

In this way, the same effect as that of bearing apparatus 10 shown in Fig. 7 can be obtained, and as with bearing apparatus 10 shown in Fig. 8, the lubricating oil discharged from nozzle 32a can be securely supplied toward cage 16 or rolling element 15 via a region near rolling element 15 relative to end surface 16a of cage 16.

The characteristic configurations of the examples useful for understanding the present invention will be listed, although a part of the configurations may be repeatedly described.

A bearing apparatus 10 according to one embodiment of the present invention includes: a bearing 11; and a lubricating oil supply unit 20 connected to bearing 11. Bearing 11 includes: an outer ring 13 having an outer ring raceway surface at an inner circumferential surface of outer ring 13; an inner ring 14 having an inner ring raceway surface at an outer circumferential surface of inner ring 14, inner ring 14 being disposed inwardly of outer ring 13 such that the inner ring raceway surface faces the outer ring raceway surface; a plurality of rolling elements 15 in contact with the outer ring raceway surface and the inner ring raceway surface, the plurality of rolling elements 15 being arranged side by side on an annular raceway; and a cage 16 configured to hold rolling elements 15. Lubricating oil supply unit 20 includes: a retainer (lubricating oil tank 30) configured to retain lubricating oil to be supplied to inside of bearing 11; a supplier (drive circuit 28, pump 29, suction tube 31, discharge tube 32, nozzle 32a) configured to supply the lubricating oil from the retainer to the inside of bearing 11; and a power generator 25 configured to generate power. The supplier is operated using the power generated by power generator 25. The supplier includes a nozzle 32a for supplying the lubricating oil to the inside of bearing 11. A tip of nozzle 32a is positioned at a center side of cage 16 relative to an end surface 16a of cage 16 in an axial direction of bearing 11. A ratio ((A/W) × 100 or (B/W) × 100 (% as a unit)) of a distance A, B from end surface 16a of cage 16 to the tip of nozzle 32a with respect to a width W of cage 16 is more than 0% and not more than 20%.

In this way, the lubricating oil can be securely supplied from lubricating oil supply unit 20 to the contact portion between rolling element 15 and each of inner ring 14 and outer ring 13. As a result, there can be obtained bearing apparatus 10 that can be stably operated for a long time.

It should be noted that if the above-described ratio is not more than 0% (i.e., if the position of the tip of nozzle 32a overlaps with end surface 16a of cage 16 or is located outwardly of cage 16 relative to end surface 16a in the axial direction of bearing 11), the tip of nozzle 32a may be located at a position not overlapping with cage 16 when viewed in the radial direction of bearing 11 in consideration of displacement or the like of cage 16 during use of bearing 11, with the result that the lubricating oil may be unable to be sufficiently supplied to the inside of cage 16 (region closer to rolling element 15). Moreover, if the tip of nozzle 32a is located at a position not overlapping with cage 16 (outwardly of end surface 16a of cage 16) when viewed in the radial direction, the lubricating oil discharged from the tip of nozzle 32a may not sufficiently reach rolling element 15 due to wind pressure (also referred to as "air curtain") caused by high-speed rotation of bearing 11. Moreover, if the above-described ratio is more than 20%, the tip of nozzle 32a may be brought into contact with rolling element 15.

The lower limit of the ratio may be 2%, 5%, or 7%, for example. On the other hand, the upper limit of the ratio may be 15% or 13%.

In bearing apparatus 10 described above, bearing 11 may be an angular contact ball bearing, and lubricating oil supply unit 20 may be disposed at a rear side of bearing 11 as shown in Fig. 2, Fig. 5, and Fig. 6. In this case, the lubricating oil can be supplied to the contact portion between rolling element 15 and each of inner ring 14 and outer ring 13 in bearing apparatus 10 in which lubricating oil supply unit 20 is disposed at the rear side relative to the angular contact ball bearing serving as bearing 11 (end surface side at which a distance from the contact point between outer ring 13 and rolling element 15 (ball) is smaller than a distance from the contact point between inner ring 14 and rolling element 15 (ball) in the axial direction of bearing 11). It should be noted that a portion of the outer circumferential surface of inner ring 14 from the inner ring raceway surface of inner ring 14 of bearing 11 to the end surface thereof at the rear side may include an inclination portion 14a inclined from the inner ring raceway surface side toward the end surface side (inclination portion inclined to become gradually closer to the axis of center of rotation of bearing 11). The tip of nozzle 32a may be disposed at the inner ring 14 side when viewed from the center of rolling element 15. Moreover, from a different point of view, the tip of nozzle 32a may be disposed between cage 16 and inner ring 14.

In bearing apparatus 10 according to the present invention bearing 11 may be an angular contact ball bearing, and lubricating oil supply unit 20 is disposed at a front side of bearing 11 as shown in Fig. 7 to Fig. 9. The ratio (B/W) × 100 (% as a unit) may be more than 0% and not more than 10%.

In the present invention the lubricating oil can be supplied to the contact portion between rolling element 15 and each of inner ring 14 and outer ring 13 in bearing apparatus 10 in which lubricating oil supply unit 20 is disposed at the front side relative to the angular contact ball bearing serving as bearing 11 (end surface side at which a distance from the contact point between outer ring 13 and rolling element 15 (ball) is larger than a distance from the contact point between inner ring 14 and rolling element 15 (ball) in the axial direction of bearing 11). It should be noted that a portion of the outer circumferential surface of inner ring 14 of bearing 11 at the front side relative to the inner ring raceway surface of inner ring 14 includes a stepped portion 14b in which the outer circumferential surface has a shape depressed from the inner ring raceway surface side toward the front side. Stepped portion 14b is formed at a position overlapping with cage 16 when viewed in the radial direction of bearing 11. The tip of nozzle 32a is disposed to face stepped portion 14b. It should be noted that when the ratio (B/W) × 100 (% as a unit) is more than 10%, the tip of nozzle 32a may be brought into contact with rolling element 15. The upper limit of the ratio (B/W) × 100 (% as a unit) may be 8% or 6%. Moreover, the lower limit of the ratio (B/W) × 100 (% as a unit) may be 2%, 3%, or 4%. When lubricating oil supply unit 20 is disposed at the front side of bearing 11 as described above, the ratio (B/W) × 100 (% as a unit) may be 5%.

In bearing apparatus 10 described above, the following relational expression may be satisfied: PCD - D < ND < PCD - 0.3D, where ND represents a pitch diameter of the tip of nozzle 32a in bearing 11, PCD represents a pitch diameter of each of the plurality of rolling elements, and D represents a width of each of the rolling elements in a radial direction of the bearing.

In this case, the tip of nozzle 32a can be disposed at a position outwardly of the contact portion between inner ring 14 and rolling element 15 and inwardly of inner diameter surface 16b of cage 16 in the radial direction of bearing 11. It should be noted that the lower limit of pitch diameter ND of the tip of nozzle 32a may be (PCD - 0.9D) or (PCD - 0.8D). Moreover, the upper limit of pitch diameter ND may be (PCD - 0.4D) or (PCD - 0.5D).

It should be noted that when the lower limit of pitch diameter ND is smaller than (PCD - D), the tip of nozzle 32a is located at a position close to the center of rotation of bearing 11 relative to the contact portion between inner ring 14 and rolling element 15, with the result that inner ring 14 may be brought into contact with the tip of nozzle 32a. Moreover, when the upper limit of pitch diameter ND is more than (PCD - 0.3D), the tip of nozzle 32a may be brought into contact with cage 16.

In bearing apparatus 10 described above, a center axis of the tip of nozzle 32a may be inclined to the cage 16 side relative to the axial direction of bearing 11, and an intersection between the center axis of the tip of nozzle 32a and a surface of cage 16 may be located at the rolling element 15 side relative to end surface 16a of cage 16 in the axial direction of bearing 11.

In this case, the lubricating oil supplied from the tip of nozzle 32a can be supplied securely to the rolling element 15 side (i.e., region close to rolling element 15) relative to the end surface of cage 16.

In bearing apparatus 10 described above, an inner diameter surface 16b of cage 16 may have a cross sectional shape with a larger diameter as inner diameter surface 16b of cage 16 extends toward the center side from an end portion of inner diameter surface 16b of cage 16 in the axial direction of bearing 11 as shown in Fig. 2 and Fig. 5 to Fig. 9.

In this case, when rolling element 15 is held at the central portion in the axial direction in cage 16, the lubricating oil supplied from the tip of nozzle 32a to the inside of bearing 11 (for example, space between cage 16 and inner ring 14) can be supplied securely to rolling element 15 along inner diameter surface 16b of cage 16 using centrifugal force resulting from rotation of bearing 11.

Although the embodiments of the present invention have been illustrated, the embodiments and examples described above can be modified in various manners. Further, the scope of the present invention is not limited to the above-described embodiments. The scope of the present invention is defined by the terms of the claims, and is intended to include any modifications within the scope defined by the appended claims.

### INDUSTRIAL APPLICABILITY

The present invention is particularly advantageously applied to a bearing apparatus including a lubricating oil supply unit having a power generator, as well as a mechanical apparatus including the bearing apparatus.

### REFERENCE SIGNS LIST

10: bearing apparatus; 11: bearing; 13: outer ring; 14: inner ring; 14a: inclination portion; 14b: stepped portion; 15: rolling element; 16: cage; 16a: end surface; 16b: inner diameter surface; 16c: corner portion; 20: lubricating oil supply unit; 21: housing main body; 22: lid body; 23a, 23b: heat conductor; 24: thermoelectric element; 25: power generator; 26: power supply circuit; 27: control circuit; 28: drive circuit; 29: pump; 30: lubricating oil tank; 31: tube; 32: discharge tube; 32a: nozzle; 32b: end portion; 32c: center line; 33: outer ring spacer; 34: inner ring spacer; 35: tap hole; 36: clearance; 50: machine tool spindle; 51: rotation shaft; 52: spindle housing; 53: outer circumference housing; 54: contact probe; 55: electric conduction line; 56: output board; 57: mount; 58: cover member; 70: external output unit.

## Claims

1. A bearing apparatus (10) comprising:
a bearing (11); and
a lubricating oil supply unit (20) connected to the bearing (11),
the bearing (11) including
an outer ring (13) having an outer ring raceway surface at an inner circumferential surface of the outer ring (13),
an inner ring (14) having an inner ring raceway surface at an outer circumferential surface of the inner ring (14), the inner ring (14) being disposed inwardly of the outer ring (13) such that the inner ring raceway surface faces the outer ring raceway surface,
a plurality of rolling elements (15) in contact with the outer ring raceway surface and the inner ring raceway surface, the plurality of rolling elements (15) being arranged side by side on an annular raceway, and
a cage (16) configured to hold the rolling elements (15),
the lubricating oil supply unit (20) including
a retainer (30) configured to retain lubricating oil to be supplied to inside of the bearing (11),
a supplier (29) configured to supply the lubricating oil from the retainer (30) to the inside of the bearing (11), and
a power generator (25) configured to generate power,
the supplier (29) being operated using the power generated by the power generator (25),
the supplier (29) including a nozzle (32a) for supplying the lubricating oil to the inside of the bearing (11),
a tip of the nozzle (32a) being positioned at a center side of the cage (16) relative to an end surface (16a) of the cage (16) in an axial direction of the bearing (11),
a ratio of a distance from the end surface (16a) of the cage (16) to the tip of the nozzle (32a) with respect to a width of the cage (16) being more than 0% and not more than 20%,
wherein the tip of the nozzle (32a) includes an end (32b) inclined or curved toward the outer ring (13) side of the bearing (11),
**characterized in that**
an inner diameter surface (16b) of the cage (16) has a cross sectional shape with a larger diameter as the inner diameter surface (16b) of the cage (16) extends toward the center side from an end portion of the inner diameter surface (16b) of the cage (16) in the axial direction of the bearing (11),
wherein the shape of the inner diameter surface (16b) is a curved shape depressed toward the outer circumferential side of the bearing (11),
wherein the lubricating oil supply unit (20) is disposed at a front side of the bearing (11),
the tip of the nozzle (32a) is disposed to face a stepped portion (14b) of the outer circumferential surface of the inner ring (14) of the bearing (11),
and the stepped portion (14b) is disposed at a position overlapping with the cage (16) when viewed in the radial direction of the bearing (11).

2. The bearing apparatus (10) according to claim 1, wherein
the bearing (11) is an angular contact ball bearing and the ratio is more than 0% and not more than 10%.

3. The bearing apparatus (10) according to any one of claims 1 to 2, wherein the following relational expression is satisfied: PCD - D < ND < PCD - 0.3D, where ND represents a pitch diameter of the tip of the nozzle (32a) in the bearing (11), PCD represents a pitch diameter of each of the plurality of rolling elements (15), and D represents a width of each of the rolling elements (15) in a radial direction of the bearing (11).

4. The bearing apparatus (10) according to any one of claims 1 to 3, wherein
a center axis (32c) of the tip of the nozzle (32a) is inclined to the cage (16) side relative to the axial direction of the bearing (11), and
an intersection between the center axis (32c) of the tip of the nozzle (32a) and a surface of the cage (16) is located at the rolling element (15) side relative to the end surface (16a) of the cage (16) in the axial direction of the bearing (11).

## Patentansprüche

1. Lagervorrichtung (10), umfassend:
ein Lager (11); und
eine Schmierölversorgungseinheit (20), die mit dem Lager (11) verbunden ist, wobei das Lager (11) aufweist:
einen Außenring (13) mit einer Außenring-Laufbahnfläche an einer Innenumfangsfläche des Außenrings (13),
einen Innenring (14) mit einer Innenring-Laufbahnfläche an einer Außenumfangsfläche des Innenrings (14), wobei der Innenring (14) innerhalb des Außenrings (13) dergestalt angeordnet ist, dass die Innenring-Laufbahnfläche der Außenring-Laufbahnfläche zugewandt ist,
mehrere Rollenelemente (15), die in Kontakt mit der Außenring-Laufbahnfläche und der Innenring-Laufbahnfläche stehen, wobei die mehreren Rollenelemente (15) nebeneinander auf einer ringförmigen Laufbahn angeordnet sind, und
einen Käfig (16), der zum Halten der Rollenelemente (15) eingerichtet ist, wobei die Schmierölversorgungseinheit (20) umfasst:
einen Rückhalter (30), der so eingerichtet ist, dass er Schmieröl zurückhält, das ins Innere des Lagers (11) zugeführt werden soll,
eine Zufuhrvorrichtung (29), die so eingerichtet ist, dass sie das Schmieröl aus dem Rückhalter (30) in das Innere des Lagers (11) leitet, und
einen Stromgenerator (25), der zur Stromerzeugung eingerichtet ist, wobei die Zufuhrvorrichtung (29) unter Verwendung des durch den Stromgenerator (25) erzeugten Stroms betrieben wird,
wobei die Zufuhrvorrichtung (29) eine Düse (32a) zum Zuführen des Schmieröls ins Innere des Lagers (11) umfasst,
wobei eine Spitze der Düse (32a) in einer Mitte des Käfigs (16) relativ zu einer Endfläche (16a) des Käfigs (16) in einer axialen Richtung des Lagers (11) positioniert ist, wobei ein Verhältnis einer Distanz von der Endfläche (16a) des Käfigs (16) zu der Spitze der Düse (32a) in Bezug auf eine Breite des Käfigs (16) mehr als 0 % und nicht mehr als 20 % beträgt,
wobei die Spitze der Düse (32a) ein Ende (32b) umfasst, das zur Seite des Außenrings (13) des Lagers (11) hin geneigt oder gekrümmt ist,
**dadurch gekennzeichnet, dass**
eine Innendurchmesserfläche (16b) des Käfigs (16) eine Querschnittsform mit einem Durchmesser aufweist, der umso größer wird, je weiter sich die Innendurchmesserfläche (16b) des Käfigs (16) von einem Endabschnitt der Innendurchmesserfläche (16b) des Käfigs (16) in der axialen Richtung des Lagers (11) zur Mitte hin erstreckt,
wobei die Form der Innendurchmesserfläche (16b) eine gekrümmte Form ist, die in Richtung der Seite des Außenumfangs des Lagers (11) vertieft ist,
wobei die Schmierölversorgungseinheit (20) auf einer Vorderseite des Lagers (11) angeordnet ist,
wobei die Spitze der Düse (32a) so angeordnet ist, dass sie einem gestuften Abschnitt (14b) der Außenumfangsfläche des Innenrings (14) des Lagers (11) zugewandt ist,
und der gestufte Abschnitt (14b) an einer Position angeordnet ist, die, in der radialen Richtung des Lagers (11) gesehen, den Käfig (16) überlappt.

2. Lagervorrichtung (10) nach Anspruch 1, wobei
das Lager (11) ein Schrägkugellager ist und das Verhältnis mehr als 0 % und nicht mehr als 10 % beträgt.

3. Lagervorrichtung (10) nach einem der Ansprüche 1 und 2, wobei der folgende relationale Ausdruck erfüllt ist: PCD - D < ND < PCD - 0,3D, wobei ND einen Teilkreisdurchmesser der Spitze der Düse (32a) in dem Lager (11) darstellt, PCD einen Teilkreisdurchmesser jedes der mehreren Rollenelemente (15) darstellt und D eine Breite jedes der Rollenelemente (15) in einer radialen Richtung des Lagers (11) darstellt.

4. Lagervorrichtung (10) nach einem der Ansprüche 1 bis 3, wobei eine Mittelachse (32c) der Spitze der Düse (32a) zur Seite des Käfigs (16) relativ zur axialen Richtung des Lagers (11) geneigt ist und
wobei sich ein Schnittpunkt zwischen der Mittelachse (32c) der Spitze der Düse (32a) und einer Oberfläche des Käfigs (16) auf der Seite des Rollenelements (15) relativ zur Endfläche (16a) des Käfigs (16) in der axialen Richtung des Lagers (11) befindet.

## Revendications

1. Appareil de palier (10) comprenant :
un palier (11) ; et
une unité d'alimentation en huile lubrifiante (20) reliée au palier (11),
le palier (11) comportant :
une bague extérieure (13) présentant une surface de chemin de roulement de bague extérieure sur une surface circonférentielle intérieure de la bague extérieure (13),
une bague intérieure (14) présentant une surface de chemin de roulement de bague intérieure sur une surface circonférentielle extérieure de la bague intérieure (14), la bague intérieure (14) étant disposée vers l'intérieur de la bague extérieure (13) de manière que la surface de chemin de roulement de bague intérieure soit en regard de la surface de chemin de roulement de bague extérieure,
une pluralité d'éléments roulants (15) au contact de la surface de chemin de roulement de bague extérieure et de la surface de chemin de roulement de bague intérieure, les éléments roulants de la pluralité d'éléments roulants (15) étant placés côte à côte sur un chemin de roulement annulaire, et
une cage (16) configurée pour recevoir les éléments roulants (15),
l'unité d'alimentation en huile lubrifiante (20) comportant :
un dispositif de retenue (30) configuré pour retenir l'huile lubrifiante à fournir à l'intérieur du palier (11),
un élément d'alimentation (29) configuré pour alimenter l'intérieur du palier (11) en huile lubrifiante provenant du dispositif de retenue (30), et
un générateur d'énergie (25) configuré pour produire de l'énergie,
l'élément d'alimentation (29) étant actionné à l'aide de l'énergie produite par le générateur d'énergie (25),
l'élément d'alimentation (29) comportant une buse (32a) destinée à alimenter en huile lubrifiante l'intérieur du palier (11),
une pointe de la buse (32a) étant positionnée d'un côté central de la cage (16) par rapport à une surface d'extrémité (16a) de la cage (16) dans une direction axiale du palier (11),
le rapport entre une distance allant de la surface d'extrémité (16a) de la cage (16) à la pointe de la buse (32a) et une largeur de la cage (16) étant supérieur à 0 % et inférieur ou égal à 20 %, dans lequel la pointe de la buse (32a) présente une extrémité (32b) inclinée ou incurvée vers le côté bague extérieure (13) du palier (11),
**caractérisé en ce que :**
une surface de diamètre intérieur (16b) de la cage (16) présente une forme en coupe transversale dont le diamètre augmente à mesure que la surface de diamètre intérieur (16b) de la cage (16) s'étend vers le côté central depuis une partie d'extrémité de la surface de diamètre intérieur (16b) de la cage (16) dans la direction axiale du palier (11),
dans lequel la forme de la surface de diamètre intérieur (16b) est une forme incurvée enfoncée vers le côté circonférentiel extérieur du palier (11),
dans lequel l'unité d'alimentation en huile lubrifiante (20) est disposée d'un côté avant du palier (11)
la pointe de la buse (32a) est disposée en regard d'une partie étagée (14b) de la surface circonférentielle extérieure de la bague intérieure (14) du palier (11),
et la partie étagée (14b) est disposée à une position se chevauchant avec la cage (16) lorsqu'elle est vue dans la direction radiale du palier (11).

2. Appareil de palier (10) selon la revendication 1, dans lequel :
le palier (11) est un roulement à billes à contact oblique et le rapport est supérieur à 0 % et inférieur ou égal à 10 %.

3. Appareil de palier (10) selon l'une quelconque des revendications 1 et 2, dans lequel l'expression relationnelle suivante est satisfaite: PCD ― D < ND < PCD ― 0,3D, où ND représente un diamètre primitif de la pointe de la buse (32a) dans le palier (11), PCD représente un diamètre primitif de chaque élément de la pluralité d'éléments roulants (15), et D représente une largeur de chacun des éléments roulants (15) dans une direction radiale du palier (11).

4. Appareil de palier (10) selon l'une quelconque des revendications 1 à 3, dans lequel :
un axe central (32c) de la pointe de la buse (32a) est incliné vers le côté cage (16) par rapport à la direction axiale du palier (11), et
une intersection entre l'axe central (32c) de la pointe de la buse (32a) et une surface de la cage (16) se situe du côté élément roulant (15) par rapport à la surface d'extrémité (16a) de la cage (16) dans la direction axiale du palier (11).
